# EUROPEAN PATENT APPLICATION

(11) **EP 4 572 268 A1**
(43) Date of publication of application: **18.06.2025**
(21) Application number: 22954456.4
(22) Date of filing: 10.08.2022
(51) Int. Cl.: H04L 27/26

(54) **BEAM MEASUREMENT REPORTING METHOD AND APPARATUS FOR UPLINK TRANSMISSION**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/111581
(87) International publication number: WO 2024/031484

(57) **Abstract**

The present disclosure relates to the field of communications. Provided are a beam reporting method and apparatus, which can be applied to communication systems such as long-term evolution (LTE) systems, 5th-generation (5G) mobile communication systems, 5G new-radio (NR) systems or other future new mobile communication systems. The method comprises: receiving channel state information (CSI) measurement and reporting configuration information, which is sent by a network device and is used for beam management in uplink transmission; and sending, to the network device, beam reporting information, which is measured by a UE, wherein the beam reporting information comprises beam information. By means of the present disclosure, a UE can acquire any beam for uplink simultaneous transmission from multiple panels and for uplink non-simultaneous transmission from multiple panel, such that the situation of the UE having no appropriate beam for uplink simultaneous transmission is avoided, thereby improving the efficiency of uplink simultaneous transmission performed by the UE.

## Description

### TECHNICAL FIELD

The present disclosure relates to the field of mobile communication technology, and specifically to a beam measurement reporting method and apparatus for an uplink transmission.

### BACKGROUND

In a wireless communication system, in Release 18 (R18) uplink multiple-input multiple-output (MIMO) enhancement is a feature intended to provide a simultaneous uplink transmission towards multiple transmission reception points (TRPs) through the terminal having multiple antenna panels, so as to further improve the uplink system transmission throughput and transmission reliability.

In order to support an uplink simultaneous transmission from multiple panels (STxMP) in R18, it is necessary to determine an uplink beam suitable for an uplink simultaneous transmission for the terminal. Providing the uplink beam for UE to support the uplink simultaneous transmission is an urgent problem that needs to be solved.

### SUMMARY

The present disclosure provide a beam measurement reporting method and apparatus for an uplink transmission, which may be applied to long term evolution (LTE) systems, fifth generation (5th generation, 5G) mobile communication systems, and 5G new radio (NR) systems, or other future new mobile communication systems and other communication systems, and enable the UE to obtain a beam used for either uplink simultaneous transmission based on multiple antenna panels or uplink non-simultaneous transmission based on multiple antenna panels, so as to avoid that the UE lacks suitable beams for the uplink simultaneous transmission, thus improving an efficiency of the UE for the uplink simultaneous transmission.

According to a first aspect of the embodiments of the present disclosure, a beam measurement reporting method for an uplink transmission is provided, performed by a user equipment (UE), including: receiving channel state information (CSI) measurement and reporting configuration information for beam management of an uplink transmission sent by a network device, in which the CSI measurement and reporting configuration information instructs the UE to report a beam used for any of an uplink simultaneous transmission based on multiple antenna panels or an uplink non-simultaneous transmission based on multiple antenna panels; and sending beam reporting information measured by the UE to the network device, in which the beam reporting information includes beam information.

Optionally, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

Optionally, the N beams are grouped into one or more beam pairs according to beam grouping information in the beam reporting information or according to a predefined manner.

Optionally, the predefined manner comprises any of: grouping any specific number of beams among the N beams into a beam group; or grouping a specific number of beams sequentially selected from the N beams into a beam group.

Optionally, in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

Optionally, the CSI measurement and reporting configuration information comprises a transmission mode configuration parameter, wherein in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

Optionally, the beam reporting information further comprises a UE capability value set index corresponding to each beam.

Optionally, the beam reporting information is configured to schedule an uplink transmission based on a single downlink control information (DCI) or to schedule an uplink transmission based on multiple DCIs.

Optionally, the CSI measurement and reporting configuration information supports any of: periodic CSI reporting; semi-persistent CSI reporting; or aperiodic CSI reporting.

Optionally, the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

According to a second aspect of the embodiments of the present disclosure, a beam measurement reporting method for an uplink transmission is provided, performed by a network device, including: sending channel state information (CSI) measurement and reporting configuration information for beam management of an uplink transmission to a user equipment (UE), in which the CSI measurement and reporting configuration information instructs the UE to report a beam used for any of an uplink simultaneous transmission based on multiple antenna panels or an uplink non-simultaneous transmission based on multiple antenna panels; and receiving beam reporting information sent by the UE, in which the beam reporting information includes beam information.

Optionally, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

Optionally, the N beams are grouped into one or more beam pairs according to beam grouping information in the beam reporting information or according to a predefined manner.

Optionally, the predefined manner comprises any of: grouping any specific number of beams among the N beams into a beam group; or grouping a specific number of beams sequentially selected from the N beams into a beam group.

Optionally, in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

Optionally, the CSI measurement and reporting configuration information comprises a transmission mode configuration parameter, wherein in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

Optionally, the beam reporting information further comprises a UE capability value set index corresponding to each beam.

Optionally, the beam reporting information is configured to schedule an uplink transmission based on a single downlink control information (DCI) or to schedule an uplink transmission based on multiple DCIs.

Optionally, the CSI measurement and reporting configuration information supports any of: periodic CSI reporting; semi-persistent CSI reporting; or aperiodic CSI reporting.

Optionally, the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

According to a third aspect of the embodiments of the present disclosure, a communication apparatus is provided. The communication apparatus can realize some or all of functions of the UE in the method described in the above first aspect, e.g., the functions of the communication apparatus may have the functions in some or all the embodiments in the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above methods. The transceiver module is configured to support communication between the communication apparatus and other devices. The communication apparatus may further include a storage module coupled to the transceiver module and the processing module, and is configured to store computer programs and data necessary for the communication apparatus.

As an example, the processing module may be a processor. The transceiver module may be a transceiver or a communication interface. The storage module may be a memory.

As an implementation, the communication apparatus includes: a transceiver module, configured to receive channel state information (CSI) measurement and reporting configuration information for beam management of an uplink transmission sent by a network device, wherein the CSI measurement and reporting configuration information instructs the UE to report a beam used for an uplink simultaneous transmission based on multiple antenna panels or an uplink non-simultaneous transmission based on multiple antenna panels; and send beam reporting information measured by the UE to the network device, wherein the beam reporting information comprises beam information.

The beam information is configured to indicate any of: the beam of the UE that is able to be used for the uplink simultaneous transmission based on multiple antenna panels; or the beam of the UE that is able to be used for the uplink non-simultaneous transmission based on multiple antenna panels.

According to a fourth aspect of the embodiments of the present disclosure, another communication apparatus is provided. The communication apparatus can realize some or all of functions of the network device in the method described in the above second aspect, e.g., the functions of the communication apparatus may have the functions in some or all the embodiments in the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above methods. The transceiver module is configured to support communication between the communication apparatus and other devices. The communication apparatus may further include a storage module coupled to the transceiver module and the processing module, and is configured to store computer programs and data necessary for the configuration information transmission apparatus.

As an example, the processing module may be a processor. The transceiver module may be a transceiver or a communication interface. The storage module may be a memory.

As an implementation, the communication apparatus includes: a transceiver module, configured to send channel state information (CSI) measurement and reporting configuration information for beam management of an uplink transmission to a user equipment (UE), wherein the CSI measurement and reporting configuration information instructs the UE to report a beam used for an uplink simultaneous transmission based on multiple antenna panels or an uplink non-simultaneous transmission based on multiple antenna panels; and receive beam reporting information sent by the UE, wherein the beam reporting information comprises beam information.

The beam information is configured to indicate any of: the beam of the UE that is able to be used for the uplink simultaneous transmission based on multiple antenna panels; or the beam of the UE that is able to be used for the uplink non-simultaneous transmission based on multiple antenna panels.

According to a fifth aspect of the embodiments of the present disclosure, a communication apparatus including a processor is provided. When a computer program in a memory is called by the processor, the method described in the first aspect or the second aspect is implemented.

According to a sixth aspect of the embodiments of the present disclosure, a communication apparatus including a processor is provided. When a computer program in a memory is called by the processor, the method described in the second aspect is implemented.

According to a seventh aspect of the embodiments of the present disclosure, a communication apparatus including a processor and a memory for storing a computer program is provided. When the computer program stored in the memory is executed by the processor, the communication apparatus is caused to implement the method described in the first aspect.

According to an eighth aspect of the embodiments of the present disclosure, a communication apparatus including a processor and a memory for storing a computer program is provided. When the computer program stored in the memory is executed by the processor, the communication apparatus is caused to implement the method described in the second aspect.

According to a ninth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the first aspect.

According to a tenth aspect of the embodiments of the present disclosure, a communication apparatus is provided, including a processor and an interface circuit for receiving code instructions and sending the code instructions to the processor, in which the processor is configured to run the code instructions to cause the apparatus to perform the method described in the second aspect.

According to an eleventh aspect of the embodiments of the present disclosure, a beam measurement reporting system for an uplink transmission is provided, in which the system includes the communication apparatus described in the third aspect and the communication apparatus described in the fourth aspect, or the communication apparatus described in the fifth aspect and the communication apparatus described in the sixth aspect, or the communication apparatus described in the seventh aspect and the communication apparatus described in the eighth aspect, or the communication apparatus described in the ninth aspect and the communication apparatus described in the tenth aspect.

According to a twelfth aspect of the embodiments of the present disclosure, a computer-readable storage medium for storing instructions used by the UE is provided. When the instructions are executed, the UE is caused to implement the method described in the first aspect or the second aspect.

According to a thirteenth aspect of the embodiments of the present disclosure, a computer program product including a computer program is provided. When the computer program is running on a computer, the computer is caused to perform the method described in any of the first aspect or the second aspect.

According to a fourteenth aspect of the embodiments of the present disclosure, a chip system is provided, including at least one processor and an interface configured to support the UE to perform the functions in the first aspect, for example, at least one of determining or processing data and information in the above method. In one possible design, the chip system also includes a memory for saving a computer program and data necessary for the terminal. The chip system may include a chip, or a chip and other discrete devices.

According to a fifteenth aspect of the embodiments of the present disclosure, a chip system is provided, including at least one processor and an interface configured to support the network device to perform the functions in the second aspect, for example, at least one of determining or processing data and information in the above method. In one possible design, the chip system also includes a memory for saving a computer program and data necessary for the terminal. The chip system may include a chip, or a chip and other discrete devices.

According to a sixteenth aspect of the embodiments of the present disclosure, a computer program is provided. When the computer program is running on a computer, the computer is caused to implement the method described in any of the first aspect or the second aspect.

Additional aspects and advantages of the present disclosure will be set forth in part in the following description, and in part will be obvious from the following description, or may be learned by practice of the present disclosure.

### BRIEF DESCRIPTION OF THE DRAWINGS

The above and/or additional aspects and advantages of the present disclosure will become apparent and readily understood from the following description of the embodiments in conjunction with the accompanying drawings, in which:
FIG. 1 is a schematic diagram of a communication system according to an embodiment of the present disclosure;
FIG. 2 is a flowchart of an MP-MTRP transmission process under an S-DCI scheduling;
FIG. 3 is a flowchart of an MP-MTRP transmission process under an S-DCI scheduling;
FIG. 4 is a schematic diagram of a CSI feedback framework;
FIG. 5 is a flowchart of a beam measurement reporting method for an uplink transmission according to an embodiment of the present disclosure;
FIG. 6 is a flowchart of a beam measurement reporting method for an uplink transmission according to an embodiment of the present disclosure;
FIG. 7 is a block diagram of a communication apparatus according to an embodiment of the present disclosure;
FIG. 8 is a block diagram of another communication apparatus according to another embodiment of the present disclosure; and
FIG. 9 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

For ease of understanding, the terms involved in the disclosure are introduced firstly.

### 1. Multiple-Input Multiple-Output (MIMO) technology

MIMO refers to a technology that uses multiple antennas to send and receive signals in the field of wireless communications. MIMO technology is mainly used in the Wi-Fi field and mobile communication field, and can effectively improve system capacity, coverage and signal-to-noise ratio. Generally, M×N MIMO means that there are M antennas at the transmitting end and N antennas at the receiving end.

MIMO is a technology that uses multiple antennas to send and receive signals. It was originally used for data transmission for a single user. However, with the development of multi-user transmission technology, various multi-user MIMO technologies have emerged based on MIMO. In order to facilitate distinction, the single-user MIMO is called single-user multiple input multiple output transmission (SU-MIMO). Multi-user MIMO technology mainly includes the following types.

Multi-user multiple input multiple output transmission (Multi-user MIMO, MU-MIMO), allows a transmitter to transmit data to multiple users at the same time. The Wi-Fi 5 standard supports 4-user MU-MIMO, and the Wi-Fi 6 standard increased the number of users to 8.

Cooperative multiple input multiple output transmission (Cooperative MIMO, CO-MIMO), through which multiple wireless devices are formed into a virtual multi-antenna system to enable adjacent transmitting devices to transmit data to multiple users at the same time.

Massive multiple input multiple output transmission (Massive MIMO), is a large-scale antenna technology that greatly increases the number of antennas. Traditional MIMO generally uses 2 to 8 antennas, while Massive MIMO can reach 64/128/256 antennas. It can greatly improve system capacity and transmission efficiency, and is a key technology for 5G mobile communications.

Broadly speaking, the multi-user MIMO technology can be classified as the MIMO technology, but when mentioning MIMO, we usually refer to the traditional MIMO concept, namely SU-MIMO.

2. Multi-transmission reception point (multi-TRP, MTRP)/multi-panel transmission technology
In order to improve cell edge coverage and provide more balanced service quality within a serving area, multi-point cooperation is still an important technical means in NR systems. From the perspective of network forms, network deployment with a large number of distributed access points plus centralized baseband processing will be conducive to providing a balanced user experience rate, and significantly reduce the delay and signaling overhead caused by handover. As the frequency band increases, from the perspective of ensuring network coverage, relatively dense deployment of access points is also required. In a high frequency band, as the integration degree of active antenna elements increases, modular active antenna arrays will be more inclined to be used. The antenna array of each TRP can be divided into several relatively independent panels, so the shape and number of ports of the entire array can be flexibly adjusted according to deployment scenarios and business needs. Panels or TRPs can also be connected by optical fibers for more flexible distributed deployment. In a millimeter wave band, as the wavelength decreases, the blocking effect caused by obstacles such as human bodies or vehicles will become more significant. In this case, from the perspective of ensuring the robustness of a link connection, cooperation between multiple TRPs or panels can also be used to transmit/receive from multiple beams with multiple angles, thereby reducing negative impacts caused by the blocking effect.

According to a mapping relationship between sending signal streams to multiple TRPs/Panels, a multi-point cooperative transmission can be divided into a coherent transmission and a non-coherent transmission. In the coherent transmission, each data layer is mapped to multiple TRPs/Panels through weighted vectors. In the non-coherent transmission, each data stream is only mapped to some TRPs/Panels. The coherent transmission has higher requirements for synchronization between transmission points and a transmission capacity of a backhaul link, and thus it is sensitive to many non-ideal factors in actual deployment conditions. Relatively speaking, the non-coherent transmission is less affected by the above factors, so it is a key consideration for the multi-point transmission technology.

It should be noted that the research and standardization work on MTRP has not been fully carried out in NR Rel-15. The R16 is mainly aimed at standardization of a physical downlink shared channel (PDSCH). The R17 is aimed at standardized enhancement of Multi-TRP for a PUSCH or a physical uplink control channel (PUCCH), but only the time division multiplexing (TDM) transmission scheme is standardized. Currently, the R18 considers simultaneous transmission enhancement of MTRP of a terminal based on multi-Panel for PUSCH/PUCCH.

In order to better understand the beam measurement reporting method for an uplink transmission in the embodiments of the present disclosure, a communication system to which the embodiments of the present disclosure are applicable is firstly described as follows.

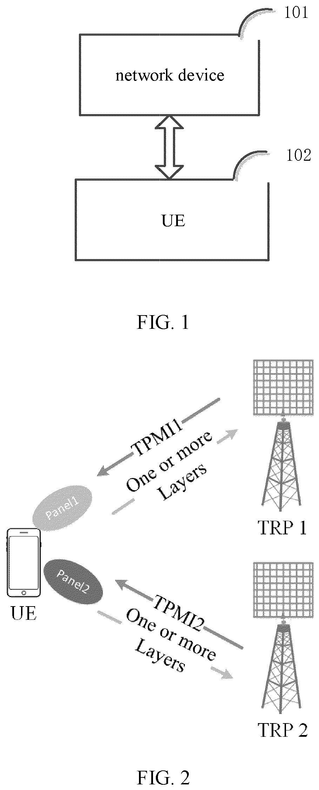

Please refer to FIG. 1, which is a schematic diagram of a communication system according to an embodiment of the present disclosure. The communication system may include, but is not limited to, one network device, and one UE. The number and form of devices shown in FIG. 1 are only shown as an example, and do not constitute a limitation on the embodiments of the present disclosure. The communication system may include two or more network devices and two or more UEs in a practical application. The communication system in FIG. 1 including one network device 101 and one UE 102 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future. It should also be noted that a side link in the embodiments of the present application may also be called a sidelink or a direct link.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (Wi-Fi^{™}) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of the remaining functions of the protocol layer are distributed in the DU, which is centrally controlled by the CU.

The UE 102 in the embodiments of the present disclosure is an entity on the user side for receiving or sending signals, such as a mobile phone. UE may also be called, a terminal, a user equipment (UE), a mobile station (MS), a mobile terminal (MT), etc. UE may be a car with communication function, a smart car, a mobile phone, a wearable device, a Pad, a computer with a wireless receiving and sending function, a virtual reality (VR) terminal, an augmented reality (AR) terminal, a wireless UE in industrial control, a wireless UE in autonomous driving, a wireless UE in remote medical surgery, a wireless UE in smart grid, a wireless UE in transportation safety, a wireless UE in smart city, a wireless UE in smart home, etc. The embodiments of the present disclosure do not limit the specific technology and the specific device form used by the UE.

In the NR technology, an uplink PUCCH transmission is aimed to multiple TRP directions of a base station. In the R17, a cooperative transmission under a TDM transmission mode was mainly standardized, and different repetitions of the same information on the PUSCH are sent to different TRPs of the base station through a time division mode at different transmission occasions (TOs) in the time domain, which has relatively low requirements on terminal capabilities and does not require an ability to support simultaneous beam transmission, but has a large transmission delay.

For the uplink, actual spatial characteristics of PUSCH channels towards different TRPs may be very different. Therefore, it is considered that Quasi Co-Located types D (QCL-D) of the PUSCH channels in different sending directions are different.

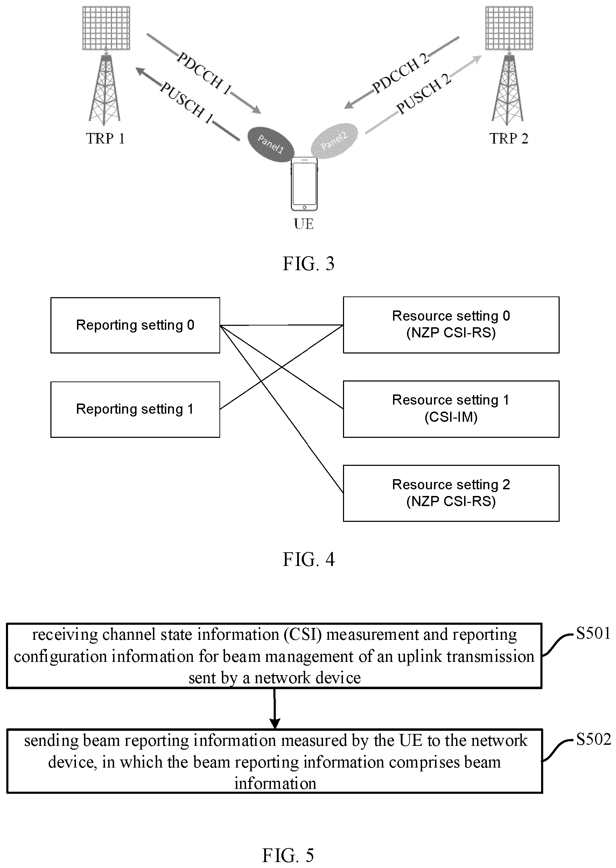

In an enhancement goal of the R18, it is mainly desired to achieve a simultaneous collaborative transmission in multiple TRP directions of the base station through multiple terminal panels to increase reliability and throughput of the transmission, and meanwhile effectively reduce a transmission delay under multiple TRPs. However, the terminal is required to have an ability to transmit multiple beams simultaneously. FIG. 2 shows an MP-MTRP transmission under single downlink control information (S-DCI) scheduling. As shown in FIG. 2, the PUSCH transmission may be transmission based on multiple PANELs/TRPs scheduled by a single PDCCH, i.e., single DCI (single-DCI, S-DCI). For example, in a beam pair, one beam corresponds to TRP1 and panel1, and the other beam corresponds to TRP2 and panel2. The TRP1 sends TPMI1 to the corresponding panel1 in the UE, and the TRP2 sends TPMI2 to the corresponding panel2 in the UE. The UE may send one or more layers to the TRP1 through the panel1 and send one or more Layers to the TRP2 through the panel2. FIG. 3 shows an MP-MTRP transmission under M-DCI scheduling. As shown in FIG. 3, the PUSCH transmission may also be transmission based on multiple PANELs/TRPs scheduled by different PDCCHs, i.e., M-DCI (multi-DCI). One of the beams corresponds to TRP1 and panel1, and the other beam corresponds to TRP2 and panel2. The TRP1 sends PDCCH1 to the corresponding panel1 in the UE, and the TRP2 sends PDCCH2 to the corresponding panel2 in the UE. The UE may send PUSCH1 to the TRP1 through the panel1, and send PUSCH2 to the TRP2 through the panel2.

In an actual deployment, a link between transmission points may be a relatively ideal backhaul link that supports high throughput and very low backhaul delay, or may be a non-ideal backhaul link that uses digital subscriber line (xDSL), microwave, relay, etc. Non-coherent joint transmission (NC-JT) scheme based on multiple DCI (M-DCI) was initially introduced mainly for non-ideal backhaul situations, but this scheme can also be used for ideal backhaul situations.

In an NR system, channel state information (CSI) may include a channel quality indicator (CQI), a precoding matrix indicator (PMI), a CSI-reference signal (CSI-RS) resource indicator (CRI), an SSB resource indicator (SS/PBCH Block Resource Indicator, SSBRI), a layer indicator (LI), a rank indicator (RI) and a layer 1 reference signal received power (L1 - RSRP). The SSBRI and the L1-RSRP are used for beam management, one indicates a beam index and the other indicates a beam strength. According to the above principle of decoupling CSI measurement and CSI feedback, each UE may be configured with N≥1 control reporting settings and M≥1 resource reporting settings (resource settings). Each reporting setting is associated with one or more resource settings, for channel and interference measurements. FIG. 4 is a schematic diagram of a CSI feedback framework, as shown in IFG. 4, for each bandwidth part (BWP), N≤12, M≤28. When used for beam management, one reporting setting can be configured, which is associated with one resource setting. Multiple CSI-RS resources in this resource setting are used for beam scanning. When used for CSI feedback, different configuration methods may be used for periodic, semi-persistent and aperiodic CSI reporting.

Considering different CSI reporting requirements, CSI reporting in the NR supports periodic, semi-persistent and aperiodic reporting. The periodic reporting occupies a large amount of feedback resources and is mostly used for link maintenance, the aperiodic reporting is triggered based on demand and can support high-precision feedback, while the semi-persistent CSI reporting is somewhere in between and can ensure high-precision feedback within a period of time.

The measurement of L1-SINR supports interference measurement based on a channel measurement resource (CMR) and a dedicated interference measurement resource (IMR).

Specifically, when a system does not configure a dedicated IMR for the terminal, the interference measurement is based on the CMR. One possible implementation is that the terminal subtracts a useful signal power from an entire received signal power. The useful signal power may be obtained through channel estimation, and the remaining part is an interference power to be measured. And standardization further stipulates that if the CMR is used for the interference measurement and is configured as CSI-RS, then the interference measurement uses CSI-RS with 1-port and a density of 3REs/RB, where RB is a resource block, and RE is a time-frequency resource element.

When the system configures a dedicated IMR for the terminal, the interference measurement is implemented based on the dedicated IMR, which specifically includes the following three interference measurement methods.

Type 1: NZP IMR only, which uses non-zero power CSI-RS.

Type 2: ZP IMR only, which uses zero-power CSI-RS (ZP CSI-RS).

Type 3: ZP+NZP IMR, which uses both CSI-RS and CSI-RS.

The ZP IMR only method can provide a higher accuracy in measuring adjacent cell/user interference. The NZP IMR only method has potential advantages in measuring inter-beam interference, and the obtained inter-beam interference may be used for multi-user MIMO scheduling and multi-TRP/panel scenarios.

For the measurement of L1-SINR, reporting quantities "cri-SINR" and "ssb-Index-SINR" have been added.

For the first and second configurations supported in the standard, details will be described as follows.

For the configuration of ZP IMR, if the interference measurement is based on ZP-IMR, from a signaling perspective, the CMR and the IMR are in one-to-one correspondence.

For each SINR, measurement is performed only on the NZP-IMR associated with each CMR.

For the configuration of NZP IMR, in one CSI reporting setting (CSI-reportConfig), the gNB configures a group of N (N≤64) CMRs and another group of N NZP-IMRs, and there is a one-to-one correspondence between CMRs and NZP IMRs. The terminal may assume that the NZP CSI-RS used for channel measurement and the NZP CSI-RS used for interference measurement are type-D QCLed.

In current beam management, the CSI reporting may be configured for measurement and reporting of beam management, informing the network of beam information currently suitable for transmission. When a report quantity in the report setting is configured as "CRI/RSRP" or "SSBI/RSRP", it means beam reporting in the beam management. In this case, the associated resource setting contains multiple CSI-RS resources or multiple SSBs. The UE determines the optimal CRI or SSBI based on measurement of RSRP of all resources. The beam reporting can be classified into two scenarios, one is beam reporting based on beam grouping, and the other is beam reporting not based on beam grouping.

For the beam reporting based on beam grouping, the terminal only needs to report a sending beam indication. The protocol stipulates that at one reporting moment, the UE may be configured to report two different gNB sending beams at the same time, and the UE can receive theses N different sending beams at the same time. This solution supports both of the above receiving beam groupings.

For the beam reporting not based on beam grouping, at one reporting moment, the UE may be configured to report N different eNB sending beams, and N=1, 2, 3, 4. Values of RSRPs of these N beams relative to a maximum RSRP are reported in a differential manner.

In order to support uplink panel selection, the R17 supports an enhanced beam reporting scheme, which notifies the terminal of functionality of a selected uplink transmission panel by updating an UL TCI state. When the base station receives CRI/SSBRI+L1-RSRP/L1-SINR corresponding to a certain UE capability set identification (ID) reported by the terminal, the base station updates the QCL TypeD source RS in the UL TCI state with the CSI-RS or SSB recommended by the terminal. The terminal receives the notification from the base station and follows the instruction of the base station to send a target PUSCH/PUCCH using the same panel as that used to receive the QCL TypeD source RS.

The UE capability value set (also called UE capability set) reported by the terminal may include a maximum number of sounding reference signal (SRS) ports supported by each panel, and each CRI/SSBRI+L1-RSRP/L1-SINR in the beam reporting corresponds to one terminal capability value index (UE capability set ID).

Under a unified TCI framework, the Rel-17 enhances the beam reporting. While reporting beam information CRI/SSBRI and L1-RSRP/L-SINR, a corresponding UE capability value index set may be reported to support notifying the terminal of the functionality of the selected uplink transmission panel by updating the TCI state. However, the current panel selection and beam reporting are only applicable the case where panels correspond to different UE capability index values. Therefore, for panels with the same UE capability value index, there is no way to distinguish between panels.

In order to support an uplink STxMP transmission in the R18, two uplink beams from different panels suitable for the simultaneous uplink transmission needs to be determined for the terminal, which cannot be well supported by the current beam reporting scheme through the CSI, so that relevant enhancement is required.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

**A** beam reporting method and apparatus provided by the embodiments of the present disclosure will be described in detail below with reference to the accompanying drawings.

Referring to FIG. 5, FIG. 5 is a flowchart of a beam measurement reporting method for an uplink transmission according to an embodiment of the present disclosure. The method is performed by a terminal. As illustrated in FIG. 5, the method may include, but not limited to, the following steps.

At step 501, channel state information (CSI) measurement and reporting configuration information for beam management of an uplink transmission sent by a network device is received. The CSI measurement and reporting configuration information instructs the UE to report a beam used for any of an uplink simultaneous transmission based on multiple antenna panels or an uplink non-simultaneous transmission based on multiple antenna panels.

In the embodiments of the present disclosure, a working principle of the CSI is described as follows. The network device configures an appropriate CSI-RS resource for the UE, and the UE measures the CSI-RS and calculates a required CSI, and reports it to the network device through a PUCCH/PUSCH. A CSI reporting process in the embodiments is to support the UE to perform the uplink simultaneous transmission based on multiple antenna panels and the uplink non-simultaneous transmission based on multiple antenna panels. Therefore, the CSI measurement and reporting configuration information sent by the network device may be used for the beam measurement of the uplink transmission and the CSI measurement and reporting configuration information instructs the UE to report the beam used for any of the uplink simultaneous transmission based on multiple antenna panels or the uplink non-simultaneous transmission based on multiple antenna panels.

In some embodiments, the CSI measurement and reporting configuration information instructs the UE to report the beam used for the uplink simultaneous transmission based on multiple antenna panels only.

In other embodiments, when the CSI measurement and reporting configuration information is configured as a first value, it instructs the UE to report the beam used for the uplink simultaneous transmission based on multiple antenna panels. When the CSI measurement and reporting configuration information is configured as a second value, it instructs the UE to report the beam used for the uplink non-simultaneous transmission based on multiple antenna panels. For example, when the CSI measurement and reporting configuration information is configured as "enabled", it instructs the UE to report the beam used for the uplink simultaneous transmission based on multiple antenna panels. When the CSI measurement and reporting configuration information is configured as "disabled", it instructs the UE to report the beam used for the uplink non-simultaneous transmission based on multiple antenna panels.

In some possible embodiments, the CSI measurement and reporting configuration information includes a transmission mode configuration parameter. In a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels. For example, the CSI measurement and reporting configuration information includes a parameter STxMP, when the parameter is configured as "enabled", it instructs the UE to report the beam used for the uplink simultaneous transmission based on multiple antenna panels, and when the parameter is configured as "disabled", it instructs the UE to report the beam used for the uplink non-simultaneous transmission based on multiple antenna panels.

At step S502, beam reporting information measured by the UE is sent to the network device. The beam reporting information includes beam information.

The beam information is configured to indicate any one of:
the beam of the UE that is able to be used for the uplink simultaneous transmission based on multiple antenna panels; or
the beam of the UE that is able to be used for the uplink non-simultaneous transmission based on multiple antenna panels.

In this embodiment of the present disclosure, the UE performs measurement according to the CSI measurement and reporting configuration information sent by the network device and calculates the required beam reporting information, and reports the beam reporting information to the network device through the PUCCH/PUSCH. The beam reporting information includes the beam information to indicate the beam used for the uplink simultaneous transmission based on multiple antenna panels or the beam used for the uplink non-simultaneous transmission based on multiple antenna panels.

In detailed, when the CSI measurement and reporting configuration information sent by the network device instructs the UE to report the beam used for the uplink simultaneous transmission based on multiple antenna panels, the UE reports the beam used for the uplink simultaneous transmission based on multiple antenna panels to the network device. When the CSI measurement and reporting configuration information sent by the network device instructs the UE to report the beam used for the uplink non-simultaneous transmission based on multiple antenna panels, the UE reports the beam used for the uplink non-simultaneous transmission based on multiple antenna panels to the network device.

According to the embodiments of the present disclosure, the CSI reporting enables the UE to obtain the beam used for the uplink simultaneous transmission based on multiple antenna panels or the beam used for the uplink non-simultaneous transmission based on multiple antenna panels, so that the uplink simultaneous transmission based on multiple antenna panels and multiple TRPs, and the uplink non-simultaneous transmission based on multiple antenna panels and multiple TRPs may be performed, thus improving efficiency of the UE to perform the uplink simultaneous transmission.

In some possible embodiments, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device. Preferably, N is greater than or equal to 4.

In this embodiment of the present disclosure, when the CSI measurement and reporting configuration information instructs the UE to measure and report the beam used for the uplink simultaneous transmission based on multiple antenna panels, the UE sends the beam information indicating the N beams to the network device. At a reporting moment, the UE may be configured to simultaneously report multiple different gNB sending beams, and the UE may receive the N different sending beams simultaneously. In order to support two uplink beams from different antenna panels for the uplink simultaneous transmission of the UE, the N beams may be grouped into one or more beam pairs.

In some possible embodiments, the N beams are grouped into one or more beam pairs according to beam grouping information in the beam reporting information or according to a predefined manner.

For example, the beam reporting information includes the beam grouping information, and the beam grouping information indicates how to group the multiple beams into one or more beam pairs. In this way, the N beams indicated by the beam information may be grouped into one or more beam pairs according to the beam grouping information.

Optionally, the N beams indicated by the beam information may be grouped into one or more beam pairs according to the predefined manner.

In some embodiments, the predefined manner includes any of:
first way: grouping any specific number of beams among the N beams into a beam group; or
second way: grouping a specific number of beams sequentially selected from the N beams into a beam group.

For example, the beam information indicates 3 beams, namely beam 1 to beam 3. The three beams may be grouped into three beam pairs by two according to the above first way, that is, {beam 1, beam 2}, {beam 2, beam 3} and {beam 1, beam 3}. For another example, the beam information indicates four beams, namely beam 1 to beam 4. The four beams may be grouped into six beam pairs by two according to the above first way, that is, {beam 1, beam 2}, {beam 1, beam 3}, {beam 1, beam 4}, {beam 2, beam 3}, {beam 2, beam 4} and {beam 3, beam 4}. The four beams may also be grouped into four beam groups according to the above first way, and each beam group has three beams, that is, {beam 1, beam 2, beam 3}, {beam 1, beam 3, beam 4}, {beam 1, beam 2, beam 4} and {beam 2, beam 3, beam 4}.

For another example, the beam information indicates 6 beams, namely beam 1 to beam 6. The 6 beams may be grouped into two beam groups according to the above second way, and each beam group has three beams, namely {beam 1, beam 2, beam 3} and {beam 4, beam 5, beam 6}.

In a possible embodiment, when the CSI measurement and reporting configuration information indicates the UE to measure and report the beam used for the uplink non-simultaneous transmission based on multiple antenna panels, the beam information indicates N beams, where N is greater than or equal to 2 and less than or equal to M, where M is the maximum uplink beam number configured by the network device. Preferably, N is greater than or equal to 4.

In this embodiment of the present disclosure, when the CSI measurement and reporting configuration information instructs the UE to measure and report the beam used for the uplink non-simultaneous transmission based on multiple antenna panels, the UE sends the beam information indicating the N beams to the network device. At a reporting moment, the UE may be configured to simultaneously report multiple different gNB sending beams, and the UE may receive the N different sending beams simultaneously.

In some embodiments, the beam reporting information further includes a UE capability value set index corresponding to each beam.

In this embodiment of the present disclosure, for example, the terminal has two panels, namely panel#0 and panel#1, and the maximum number of supported sounding reference signal (SRS) ports is 4 and 2 respectively, then the UE capability value set can be defined as {4,2}, the UE capability value set index corresponding to panel#0 is UE capability value set index#0, which indicates that the maximum number of SRS ports is 4, and the UE capability value set index corresponding to panel#1 is UE capability value set index#1, which indicates that the maximum number of SRS ports is 2. The beam reporting information may include the UE capability value set index of the corresponding beam.

For example, for the first beam, the reported UE capability value set index is UE capability value set index#0, and for the second beam, the reported UE capability value set index is UE capability value set index#1. Since the UE capability value set indexes corresponding to the two beams are different, it may be determined that the two beams correspond to two different panels and support the uplink simultaneous transmission based on multiple antenna panels.

For another example, for the first beam, the reported UE capability value set index is UE capability value set index#1, and for the second beam, the reported UE capability value set index is UE capability value set index#1. The two beams correspond to the same UE capability value set index. When the CSI measurement and reporting configuration information instructs the UE to report the beam used for the uplink simultaneous transmission based on multiple antenna panels, it may be determined that the two beams support the uplink simultaneous transmission based on multiple antenna panels. When the CSI measurement and reporting configuration information instructs the UE to report the beam used for the uplink non-simultaneous transmission based on multiple antenna panels, it may be determined that the two beams support the uplink non-simultaneous transmission based on multiple antenna panels.

In a possible embodiment, the beam reporting information is configured to schedule an uplink transmission based on a single DCI or to schedule an uplink transmission based on multiple DCIs.

In this embodiment of the present disclosure, the beam reporting information may be used to schedule the uplink transmission based on a single DCI, that is, MP-MTRP transmission under S-DCI scheduling. The PUSCH transmission may be transmission based on multiple PANELs/TRPs scheduled by a single PDCCH, that is, a single DCI. In this process, a pair of TRPs send a transmitted precoding matrix indicator (TPMI) to a corresponding pair of panels in the UE through a beam, so that the UE selects the corresponding precoding matrix according to the index.

The UE may send one or more antenna layers (Layers) to the TRP through two different panels. For spatial multiplexing, Layer is defined as a rank of the MIMO channel matrix, which is the number of independent virtual channels.

For example, in one beam pair, one beam corresponds to TRP1 and panel1, and the other beam corresponds to TRP2 and panel2. The TRP1 sends TPMI1 to the corresponding panel1 in the UE, the TRP2 sends TPMI2 to the corresponding panel2 in the UE, and the UE may send one or more layers to the TRP1 through the panel1, and send one or more layers to the TRP2 through the panel2.

Optionally, the beam reporting information may also be used to schedule the uplink transmission based on a single DCI, and the PUSCH transmission may also be transmission based on multiple PANELs/TRPs scheduled by different PDCCHs, that is, M-DCI (multi-DCI). In this process, a pair of TRPs send the PDCCH to the corresponding pair of panels in the UE, and the pair of panels in the UE send the PUSCH to the corresponding pair of TRPs.

For example, in one beam pair, one beam corresponds to TRP1 and panel1, and the other beam corresponds to TRP2 and panel2. The TRP1 sends PDCCH1 to the corresponding panel1 in the UE, the TRP2 sends PDCCH2 to the corresponding panel2 in the UE, and the UE may send PUSCH1 to the TRP1 through the panel1, and send PUSCH2 to the TRP2 through the panel2.

In a possible embodiment, the CSI measurement and reporting configuration information supports any of:
periodic CSI reporting;
semi-persistent CSI reporting; or
aperiodic CSI reporting.

In a possible embodiment, the beam used for the uplink simultaneous transmission based on multiple antenna panels indicated by the beam information is able to be used for scheduling a downlink simultaneous transmission based on multiple antenna panels. The beam used for the uplink non-simultaneous transmission based on multiple antenna panels indicated by the beam information is able to be used for scheduling a downlink non-simultaneous transmission based on multiple antenna panels.

That is, although the beam indicated by the beam information is used for the uplink transmission, the beam can actually be used for the downlink transmission.

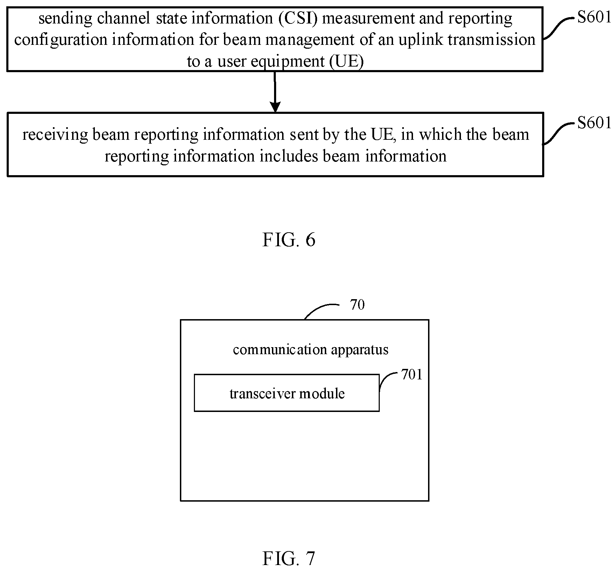

FIG. 6 is a flowchart of a beam reporting method according to an embodiment of the present disclosure. As illustrated in FIG. 6, the method is performed by a network device, and the method may include, but not limited to, the following steps.

At step 601, channel state information (CSI) measurement and reporting configuration information for beam management of an uplink transmission is sent to a UE. The CSI measurement and reporting configuration information instructs the UE to report a beam used for any of an uplink simultaneous transmission based on multiple antenna panels or an uplink non-simultaneous transmission based on multiple antenna panels.

In the embodiments of the present disclosure, a working principle of the CSI is described as follows. The network device configures an appropriate CSI-RS resource for the UE, and the UE measures the CSI-RS and calculates a required CSI, and reports it to the network device through a PUCCH/PUSCH. A CSI reporting process in the embodiments is to support the UE to perform the uplink simultaneous transmission based on multiple antenna panels and the uplink non-simultaneous transmission based on multiple antenna panels. Therefore, the CSI measurement and reporting configuration information sent by the network device may be used for the beam measurement of the uplink transmission and the CSI measurement and reporting configuration information instructs the UE to report the beam used for any of the uplink simultaneous transmission based on multiple antenna panels or the uplink non-simultaneous transmission based on multiple antenna panels.

In some embodiments, the CSI measurement and reporting configuration information instructs the UE to report the beam used for the uplink simultaneous transmission based on multiple antenna panels only.

In other embodiments, when the CSI measurement and reporting configuration information is configured as a first value, it instructs the UE to report the beam used for the uplink simultaneous transmission based on multiple antenna panels. When the CSI measurement and reporting configuration information is configured as a second value, it instructs the UE to report the beam used for the uplink non-simultaneous transmission based on multiple antenna panels. For example, when the CSI measurement and reporting configuration information is configured as "enabled", it instructs the UE to report the beam used for the uplink simultaneous transmission based on multiple antenna panels. When the CSI measurement and reporting configuration information is configured as "disabled", it instructs the UE to report the beam used for the uplink non-simultaneous transmission based on multiple antenna panels.

In some possible embodiments, the CSI measurement and reporting configuration information includes a transmission mode configuration parameter. In a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels. For example, the CSI measurement and reporting configuration information includes a parameter STxMP, when the parameter is configured as "enabled", it instructs the UE to report the beam used for the uplink simultaneous transmission based on multiple antenna panels, and when the parameter is configured as "disabled", it instructs the UE to report the beam used for the uplink non-simultaneous transmission based on multiple antenna panels.

At step S602, beam reporting information sent by the UE is received. The beam reporting information includes beam information.

The beam information is configured to indicate any one of:
the beam of the UE that is able to be used for the uplink simultaneous transmission based on multiple antenna panels; or
the beam of the UE that is able to be used for the uplink non-simultaneous transmission based on multiple antenna panels.

In this embodiment of the present disclosure, the UE performs measurement according to the CSI measurement and reporting configuration information sent by the network device and calculates the required beam reporting information, and reports the beam reporting information to the network device through the PUCCH/PUSCH. The beam reporting information includes the beam information to indicate the beam used for the uplink simultaneous transmission based on multiple antenna panels or the beam used for the uplink non-simultaneous transmission based on multiple antenna panels.

According to the embodiments of the present disclosure, the CSI reporting enables the UE to obtain the beam used for the uplink simultaneous transmission based on multiple antenna panels or the beam used for the uplink non-simultaneous transmission based on multiple antenna panels, so that the uplink simultaneous transmission based on multiple antenna panels and multiple TRPs, and the uplink non-simultaneous transmission based on multiple antenna panels and multiple TRPs may be performed, thus improving efficiency of the UE to perform the uplink simultaneous transmission.

In some possible embodiments, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device. Preferably, N is greater than or equal to 4.

In some possible embodiments, the N beams are grouped into one or more beam pairs according to beam grouping information in the beam reporting information or according to a predefined manner.

For example, the beam reporting information includes the beam grouping information, and the beam grouping information indicates how to group the multiple beams into one or more beam pairs. In this way, the N beams indicated by the beam information may be grouped into one or more beam pairs according to the beam grouping information.

Optionally, the N beams indicated by the beam information may be grouped into one or more beam pairs according to the predefined manner.

In some embodiments, the predefined manner includes any of:
first way: grouping any specific number of beams among the N beams into a beam group; or
second way: grouping a specific number of beams sequentially selected from the N beams into a beam group.

For example, the beam information indicates 3 beams, namely beam 1 to beam 3. The three beams may be grouped into three beam pairs by two according to the above first way, that is, {beam 1, beam 2}, {beam 2, beam 3} and {beam 1, beam 3}. For another example, the beam information indicates four beams, namely beam 1 to beam 4. The four beams may be grouped into six beam pairs by two according to the above first way, that is, {beam 1, beam 2}, {beam 1, beam 3}, {beam 1, beam 4}, {beam 2, beam 3}, {beam 2, beam 4} and {beam 3, beam 4}. The four beams may also be grouped into four beam groups according to the above first way, and each beam group has three beams, that is, {beam 1, beam 2, beam 3}, {beam 1, beam 3, beam 4}, {beam 1, beam 2, beam 4} and {beam 2, beam 3, beam 4}.

For another example, the beam information indicates 6 beams, namely beam 1 to beam 6. The 6 beams may be grouped into two beam groups according to the above second way, and each beam group has three beams, namely {beam 1, beam 2, beam 3} and {beam 4, beam 5, beam 6}.

In a possible embodiment, when the CSI measurement and reporting configuration information indicates the UE to measure and report the beam used for the uplink non-simultaneous transmission based on multiple antenna panels, the beam information indicates N beams, where N is greater than or equal to 2 and less than or equal to M, where M is the maximum uplink beam number configured by the network device. Preferably, N is greater than or equal to 4.

In some embodiments, the beam reporting information further includes a UE capability value set index corresponding to each beam.

In this embodiment of the present disclosure, for example, the terminal has two panels, namely panel#0 and panel#1, and the maximum number of supported sounding reference signal (SRS) ports is 4 and 2 respectively, then the UE capability value set can be defined as {4,2}, the UE capability value set index corresponding to panel#0 is UE capability value set index#0, which indicates that the maximum number of SRS ports is 4, and the UE capability value set index corresponding to panel#1 is UE capability value set index#1, which indicates that the maximum number of SRS ports is 2. The beam reporting information may include the UE capability value set index of the corresponding beam.

For example, for the first beam, the reported UE capability value set index is UE capability value set index#0, and for the second beam, the reported UE capability value set index is UE capability value set index#1. Since the UE capability value set indexes corresponding to the two beams are different, it may be determined that the two beams correspond to two different panels and support the uplink simultaneous transmission based on multiple antenna panels.

For another example, for the first beam, the reported UE capability value set index is UE capability value set index#1, and for the second beam, the reported UE capability value set index is UE capability value set index#1. The two beams correspond to the same UE capability value set index. When the CSI measurement and reporting configuration information instructs the UE to report the beam used for the uplink simultaneous transmission based on multiple antenna panels, it may be determined that the two beams support the uplink simultaneous transmission based on multiple antenna panels. When the CSI measurement and reporting configuration information instructs the UE to report the beam used for the uplink non-simultaneous transmission based on multiple antenna panels, it may be determined that the two beams support the uplink non-simultaneous transmission based on multiple antenna panels.

In a possible embodiment, the beam reporting information is configured to schedule an uplink transmission based on a single DCI or to schedule an uplink transmission based on multiple DCIs.

In a possible embodiment, the CSI measurement and reporting configuration information supports any of:
periodic CSI reporting;
semi-persistent CSI reporting; or
aperiodic CSI reporting.

In a possible embodiment, the beam used for the uplink simultaneous transmission based on multiple antenna panels indicated by the beam information is able to be used for scheduling a downlink simultaneous transmission based on multiple antenna panels. The beam used for the uplink non-simultaneous transmission based on multiple antenna panels indicated by the beam information is able to be used for scheduling a downlink non-simultaneous transmission based on multiple antenna panels.

In the above-described embodiments of the disclosure, the methods provided in the embodiments of the disclosure are described from the perspective of the network device. In order to implement each of the functions in the methods provided by the above embodiments of the disclosure, the network device may include a hardware structure, a software module to implement each of the above functions in the form of a hardware structure, a software module, or a combination of the hardware structure and the software module. A certain function of the above-described functions may be performed in the form of a hardware structure, a software module, or a combination of the hardware structure and the software module.

Corresponding to the methods provided by the embodiments of the present disclosure, the present disclosure further provides a beam reporting apparatus. Since the beam reporting apparatus provided by the embodiments of the present disclosure corresponds to the beam reporting method provided by the above-mentioned embodiments, the implementation of the beam reporting method is also applicable to the beam reporting apparatus provided in the embodiments, and will not be described in detail in the embodiments.

In the above-described embodiments of the disclosure, the methods provided in the embodiments of the disclosure are described from the perspective of the network device and the UE, respectively. In order to implement each of the functions in the methods provided by the above embodiments of the disclosure, the network device and the UE may include a hardware structure, a software module to implement each of the above functions in the form of a hardware structure, a software module, or a combination of the hardware structure and the software module. A certain function of the above-described functions may be performed in the form of a hardware structure, a software module, or a combination of the hardware structure and the software module.

Referring to FIG. 7, FIG. 7 is a block diagram of a communication apparatus 70 according to an embodiment of the present disclosure. As shown in FIG. 7, the communication apparatus 70 may include a transceiver module 701. The transceiver module 701 may include a sending module and/or a receiving module. The sending module is used to implement the sending function, and the receiving module is used to implement the receiving function. The transceiver module 701 may implement the sending function and/or the receiving function.

The communication apparatus 70 may be a UE (such as the UE described in the above method embodiments), or may be an apparatus in the UE, or may be an apparatus used in combination with the UE. Alternatively, the communication apparatus 70 may be a network device, or may be an apparatus in the network device, or may be an apparatus used in combination with the network device.

The communication apparatus 70 is the UE (such as the UE described in the above method embodiments), the apparatus includes the transceiver module 701.

The transceiver module 701 is configured to receive channel state information (CSI) measurement and reporting configuration information for beam management of an uplink transmission sent by a network device, in which the CSI measurement and reporting configuration information instructs the UE to report a beam used for any of an uplink simultaneous transmission based on multiple antenna panels or an uplink non-simultaneous transmission based on multiple antenna panels, and send beam reporting information measured by the UE to the network device, in which the beam reporting information comprises beam information.

The beam information is configured to indicate any of:
the beam of the UE that is able to be used for the uplink simultaneous transmission based on multiple antenna panels; or
the beam of the UE that is able to be used for the uplink non-simultaneous transmission based on multiple antenna panels.

With the communication apparatus according to the embodiments of the present disclosure, the CSI reporting enables the UE to obtain the beam used for the uplink simultaneous transmission based on multiple antenna panels or the beam used for the uplink non-simultaneous transmission based on multiple antenna panels, so that the uplink simultaneous transmission based on multiple antenna panels and multiple TRPs, and the uplink non-simultaneous transmission based on multiple antenna panels and multiple TRPs may be performed, thus improving efficiency of the UE to perform the uplink simultaneous transmission.

In some embodiments, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

In some embodiments, the N beams are grouped into one or more beam pairs according to beam grouping information in the beam reporting information or according to a predefined manner.

In some embodiments, the predefined manner includes any of: grouping any specific number of beams among the N beams into a beam group; or grouping a specific number of beams sequentially selected from the N beams into a beam group.

In some embodiments, in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

In some embodiments, the CSI measurement and reporting configuration information includes a transmission mode configuration parameter, in which in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

In some embodiments, the beam reporting information further includes a UE capability value set index corresponding to each beam.

In some embodiments, the beam reporting information is configured to schedule an uplink transmission based on a single downlink control information (DCI) or to schedule an uplink transmission based on multiple DCIs.

In some embodiments, the CSI measurement and reporting configuration information supports any of: periodic CSI reporting; semi-persistent CSI reporting; or aperiodic CSI reporting.

In some embodiments, the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

The communication apparatus 70 is the network device, the apparatus includes the transceiver module 701.

The transceiver module 701 is configured to send channel state information (CSI) measurement and reporting configuration information for beam management of an uplink transmission to a UE, in which the CSI measurement and reporting configuration information instructs the UE to report a beam used for any of an uplink simultaneous transmission based on multiple antenna panels or an uplink non-simultaneous transmission based on multiple antenna panels, and receive beam reporting information sent by the UE, in which the beam reporting information comprises beam information.

The beam information is configured to indicate any of:
the beam of the UE that is able to be used for the uplink simultaneous transmission based on multiple antenna panels; or
the beam of the UE that is able to be used for the uplink non-simultaneous transmission based on multiple antenna panels.

With the communication apparatus according to the embodiments of the present disclosure, the CSI reporting enables the UE to obtain the beam used for the uplink simultaneous transmission based on multiple antenna panels or the beam used for the uplink non-simultaneous transmission based on multiple antenna panels, so that the uplink simultaneous transmission based on multiple antenna panels and multiple TRPs, and the uplink non-simultaneous transmission based on multiple antenna panels and multiple TRPs may be performed, thus improving efficiency of the UE to perform the uplink simultaneous transmission.

In some embodiments, in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

In some embodiments, the N beams are grouped into one or more beam pairs according to beam grouping information in the beam reporting information or according to a predefined manner.

In some embodiments, the predefined manner includes any of: grouping any specific number of beams among the N beams into a beam group; or grouping a specific number of beams sequentially selected from the N beams into a beam group.

In some embodiments, in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

In some embodiments, the CSI measurement and reporting configuration information includes a transmission mode configuration parameter, in which in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

In some embodiments, the beam reporting information further includes a UE capability value set index corresponding to each beam.

In some embodiments, the beam reporting information is configured to schedule an uplink transmission based on a single downlink control information (DCI) or to schedule an uplink transmission based on multiple DCIs.

In some embodiments, the CSI measurement and reporting configuration information supports any of: periodic CSI reporting; semi-persistent CSI reporting; or aperiodic CSI reporting.

In some embodiments, the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

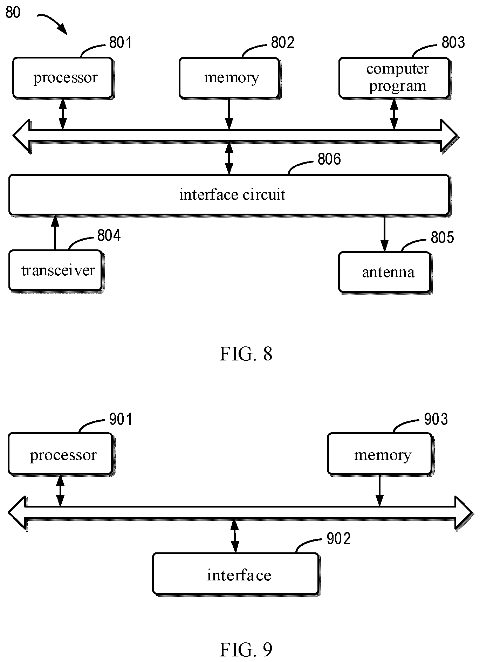

FIG. 8 is a block diagram of a communication apparatus 80 according to an embodiment of the present disclosure. The communication apparatus 80 may be a network device, a UE (such as the UE in the above method embodiments), a chip, a chip system, a processor, etc. that supports the network device to implement the method, or a chip, a chip system, a processor, etc. that supports the UE to implement the method. The apparatus may be used to implement the method in the above method embodiments. For details, please refer to the above method embodiments.

The communication apparatus 80 may include one or more processors 801. The processor 801 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 80 may also include one or more memories 802 for storing the computer program 803. The processor 801 executes the computer program 803, to cause the communication apparatus 800 to implement the method in the above method embodiments. Optionally, the memory 802 may also store data. The communication apparatus 80 and the memory 802 may be set up separately or integrated together.

Optionally, the communication apparatus 80 may also include a transceiver 804 and an antenna 805. The transceiver 804 may be called a transceiver unit, a transceiver machine, or a transceiver circuit, etc., to implement the receiving and sending function. The transceiver 804 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 80 may also include one or more interface circuits 806. The interface circuit 806 is used to receive code instructions and transmit the code instructions to the processor 801. The processor 801 runs the code instructions to cause the communication apparatus 80 to implement the method in the above method embodiment.

The communication apparatus 80 is the UE (such as the UE in the method embodiments), the processor 801 is configured to perform the steps S501-S502 in FIG. 5.

The communication apparatus 80 is the network device, the processor 801 is configured to perform the steps S601-S602 in FIG. 6.

In one implementation, the processor 801 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 801 may store a computer program 803. When the computer program 803 is running on the processor 801, the communication apparatus 80 is caused to implement the method in the above method embodiments. The computer program 803 may be solidified in the processor 801, in which case the processor 801 may be implemented in hardware.

In an implementation, the communication apparatus 80 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a UE (such as the UE in the above method embodiments), but the scope of the communication apparatus in the disclosure is not limited to this, and the structure of the communication apparatus may not be restricted by FIG. 8. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 10. The chip shown in FIG. 10 includes a processor 1001 and an interface 1002. There may be one or more processors 1001, and there may be one or more interfaces 1002.

Optionally, the chip also includes a memory 1003, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a beam measurement reporting system for an uplink transmission is provided. The system includes the communication apparatus configured as the UE (such as the UE in the above method embodiments) and the communication apparatus configured as the network device described in the embodiment of FIG. 8, or the system includes the communication apparatus configured as the UE (such as the UE in the above method embodiments) and the communication apparatus configured as the network device described in the embodiment of FIG. 8.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A beam measurement reporting method for an uplink transmission, performed by a user equipment (UE), comprising:
receiving channel state information (CSI) measurement and reporting configuration information for beam management of an uplink transmission sent by a network device, wherein the CSI measurement and reporting configuration information instructs the UE to report a beam used for any of an uplink simultaneous transmission based on multiple antenna panels or an uplink non-simultaneous transmission based on multiple antenna panels; and
sending beam reporting information measured by the UE to the network device, wherein the beam reporting information comprises beam information.

2. The method of claim 1, wherein in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

3. The method of claim 2, wherein the N beams are grouped into one or more beam pairs according to beam grouping information in the beam reporting information or according to a predefined manner.

4. The method of claim 3, wherein the predefined manner comprises any of:
grouping any specific number of beams among the N beams into a beam group; or
grouping a specific number of beams sequentially selected from the N beams into a beam group.

5. The method of claim 1, wherein in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

6. The method of claim 1, wherein the CSI measurement and reporting configuration information comprises a transmission mode configuration parameter, wherein in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

7. The method of claim 1, wherein the beam reporting information further comprises a UE capability value set index corresponding to each beam.

8. The method of claim 1, wherein the beam reporting information is configured to schedule an uplink transmission based on a single downlink control information (DCI) or to schedule an uplink transmission based on multiple DCIs.

9. The method of claim 1, wherein the CSI measurement and reporting configuration information supports any of:
periodic CSI reporting;
semi-persistent CSI reporting; or
aperiodic CSI reporting.

10. The method of claim 1, wherein the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

11. A beam measurement reporting method for an uplink transmission, performed by a network device, comprising:
sending channel state information (CSI) measurement and reporting configuration information for beam management of an uplink transmission to a user equipment (UE), wherein the CSI measurement and reporting configuration information instructs the UE to report a beam used for any of an uplink simultaneous transmission based on multiple antenna panels or an uplink non-simultaneous transmission based on multiple antenna panels; and
receiving beam reporting information sent by the UE, wherein the beam reporting information comprises beam information.

12. The method of claim 11, wherein in a case where the CSI measurement and reporting configuration information instructs the UE to measure and report the beam used for the uplink simultaneous transmission based on multiple antenna panels, the beam information indicates N beams, the N beams can be grouped into one or more beam pairs, different beam pairs are used for transmissions of different antenna panels of the UE, where N is greater than or equal to 2 and less than or equal to M, and M is a maximum uplink beam number configured by the network device.

13. The method of claim 12, wherein the N beams are grouped into one or more beam pairs according to beam grouping information in the beam reporting information or according to a predefined manner.

14. The method of claim 13, wherein the predefined manner comprises any of:
grouping any specific number of beams among the N beams into a beam group; or
grouping a specific number of beams sequentially selected from the N beams into a beam group.

15. The method of claim 11, wherein in a case where the CSI measurement and reporting configuration information instructs the UE to measure and report the beam used for the uplink non-simultaneous transmission based on multiple antenna panels, the beam information indicates N beams, where N is greater than or equal to 2 and less than or equal to M, and M is a maximum uplink beam number configured by the network device.

16. The method of claim 11, wherein the CSI measurement and reporting configuration information comprises a transmission mode configuration parameter, wherein in a case where the transmission mode configuration parameter is a first value, the CSI measurement and reporting configuration information instructs the UE to report the beam used for the uplink simultaneous transmission based on multiple antenna panels, and in a case where the transmission mode configuration parameter is a second value, the CSI measurement and reporting configuration information instructs the UE to report the beam used for the uplink non-simultaneous transmission based on multiple antenna panels.

17. The method of claim 11, wherein the beam reporting information further comprises a UE capability value set index corresponding to each beam.

18. The method of claim 11, wherein the beam reporting information is configured to schedule an uplink transmission based on a single downlink control information (DCI) or to schedule an uplink transmission based on multiple DCIs.

19. The method of claim 11, wherein the CSI measurement and reporting configuration information supports any of:
periodic CSI reporting;
semi-persistent CSI reporting; or
aperiodic CSI reporting.

20. The method of claim 11, wherein the beam used for the uplink simultaneous transmission based on multiple antenna panels indicated by the beam information is able to be used for scheduling a downlink simultaneous transmission based on multiple antenna panels; the beam used for the uplink non-simultaneous transmission based on multiple antenna panels indicated by the beam information is able to be used for scheduling a downlink non-simultaneous transmission based on multiple antenna panels.

21. A beam measurement reporting apparatus for an uplink transmission, configured in a user equipment (UE), comprising:
a transceiver module, configured to receive channel state information (CSI) measurement and reporting configuration information for beam management of an uplink transmission sent by a network device, wherein the CSI measurement and reporting configuration information instructs the UE to report a beam used for an uplink simultaneous transmission based on multiple antenna panels or an uplink non-simultaneous transmission based on multiple antenna panels; and send beam reporting information measured by the UE to the network device, wherein the beam reporting information comprises beam information.

22. A beam measurement reporting apparatus for an uplink transmission, configured in a network device, comprising:
a transceiver module, configured to send channel state information (CSI) measurement and reporting configuration information for beam management of an uplink transmission to a user equipment (UE), wherein the CSI measurement and reporting configuration information instructs the UE to report a beam used for an uplink simultaneous transmission based on multiple antenna panels or an uplink non-simultaneous transmission based on multiple antenna panels; and receive beam reporting information sent by the UE, wherein the beam reporting information comprises beam information.

23. A communication device, comprising: a transceiver, a memory, and a processor connected to the transceiver and the memory, respectively, wherein the processor is configured to control the transceiver to receive and transmit signals and to perform the method of any one of claims 1 to 20 by executing computer-executable instructions on the memory.

24. A computer storage medium for storing computer-executable instructions, wherein when the computer-executable instructions are executed by a computer, the method of any one of claims 1 to 20 is implemented.
